# EUROPÄISCHE PATENTANMELDUNG

(11) **EP 2 206 614 A1**
(43) Veröffentlichungstag der Anmeldung: **14.07.2010**
(21) Anmeldenummer: 09010677.4
(22) Anmeldetag: 19.08.2009
(51) Int. Cl.: B60C 23/04

(54) **Ventilvorrichtung und Reifendruckmessmodul**

(30) Priorität: 08.01.2009 EP 09000154
(71) Anmelder: Global Dynamix AG, 7500 St. Moritz (CH)
(72) Erfinder: Achterholt, Rainer, 8597 Landschlacht (CH)
(74) Vertreter: Samson & Partner

(57) **Zusammenfassung**

Die Erfindung betrifft eine Ventilvorrichtung mit: einem Ventilhauptkörper (2), der wenigstens teilweise aus einem elektrisch leitfähigen Material hergestellt ist, einer Reifendruckmesseinrichtung (9), und einer Antenneneinrichtung (10), wobei die Reifendruckmesseinrichtung (9) ein elektromagnetisches Koppelelement aufweist, das die Reifendruckmesseinrichtung (9) elektrisch oder elektromagnetisch mit der Antenneneinrichtung (10) koppelt.

## Beschreibung

### GEBIET DER ERFINDUNG

Die vorliegende Erfindung bezieht sich allgemein auf Ventile und insbesondere auf eine Ventilvorrichtung und ein Reifendruckmessmodul.

### HINTERGRUND DER ERFINDUNG

Es ist allgemein bekannt, an ein Ventil eine Reifendruckmesseinheit anzubringen, um den Reifendruck innerhalb eines Fahrzeugreifens zu erfassen. Die Reifendruckmesseinheit kann dabei bspw. den im Fahrzeugreifen erfassten Druck drahtlos an eine zentrale Fahrzeugsteuerung übermitteln.

So offenbart bspw. das US-Patent US 6,799,455 B1 eine Reifendruckmesseinheit, bei der ein Sender mit einer Antenne verbunden ist, die sich im Reifeninneren befindet. Bei einer derartigen Antennenanordnung dämpft der Fahrzeugreifen die von der Antenne abgehenden Funksignale. Folglich muss die Sendeleistung der Reifendruckmesseinheit entsprechend hoch sein, damit bspw. die zentrale Fahrzeugsteuerung die Funksignale zuverlässig durch den Reifen hindurch empfangen kann. Dies kann allerdings zu einem erhöhten Energieverbrauch der Reifendruckmesseinheit führen.

Aufgabe der vorliegenden Erfindung ist es, eine Ventilvorrichtung und ein Reifendruckmessmodul bereitzustellen, das eine zuverlässige, drahtlose Übertragung ermöglicht.

### ZUSAMMENFASSUNG DER ERFINDUNG

Nach einem ersten Aspekt stellt die vorliegende Erfindung eine Ventilvorrichtung bereit, mit: einem Ventilhauptkörper, der wenigstens teilweise aus einem elektrisch leitfähigen Material hergestellt ist, einer Reifendruckmesseinrichtung, und einer Antenneneinrichtung, wobei die Reifendruckmesseinrichtung ein elektromagnetisches Koppelelement aufweist, das die Reifendruckmesseinrichtung elektrisch oder elektromagnetisch mit der Antenneneinrichtung koppelt.

Nach einem zweiten Aspekt stellt die vorliegende Erfindung ein Reifendruckmessmodul für eine Ventilvorrichtung nach dem ersten Aspekt der Erfindung bereit, mit: einer Reifendruckmesseinrichtung, einer Antenneneinrichtung, und einem Modulgehäuse, wobei die Reifendruckmesseinrichtung ein Koppelelement aufweist, das die Reifendruckmesseinrichtung mit der Antenneneinrichtung elektrisch oder elektromagnetisch koppelt.

Weitere Aspekte und Merkmale der vorliegenden Erfindung ergeben sich aus den abhängigen Ansprüchen, der beigefügten Zeichnung und der nachfolgenden Beschreibung bevorzugter Ausführungsformen.

### KURZBESCHREIBUNG DER ZEICHNUNG

Ausführungsformen der Erfindung werden nun beispielhaft und unter Bezugnahme auf die beigefügte Zeichnung beschreiben, in der:
Fig. 1 eine erste Ausführungsform einer Ventilvorrichtung in Übereinstimmung mit der vorliegenden Erfindung in einer Explosionsdarstellung veranschaulicht;
Fig. 2 die Ventilvorrichtung der ersten Ausführungsform in einer Teilquerschnittsansicht zeigt;
Fig. 3 eine zweite Ausführungsform einer Ventilvorrichtung in Übereinstimmung mit der vorliegenden Erfindung in einer Teilquerschnittsansicht zeigt;
Fig. 4 die Ventilvorrichtung von Fig. 3 mit gebördeltem Ventilfußrand zur Befestigung einer Reifendruckmesseinrichtung veranschaulicht; und
Fig. 5 eine dritte Ausführungsform einer Ventilvorrichtung in Übereinstimmung mit der vorliegenden Erfindung in einer Teilquerschnittsansicht zeigt.

### BESCHREIBUNG DER BEVORZUGTEN AUSFÜHRUNGSFORMEN

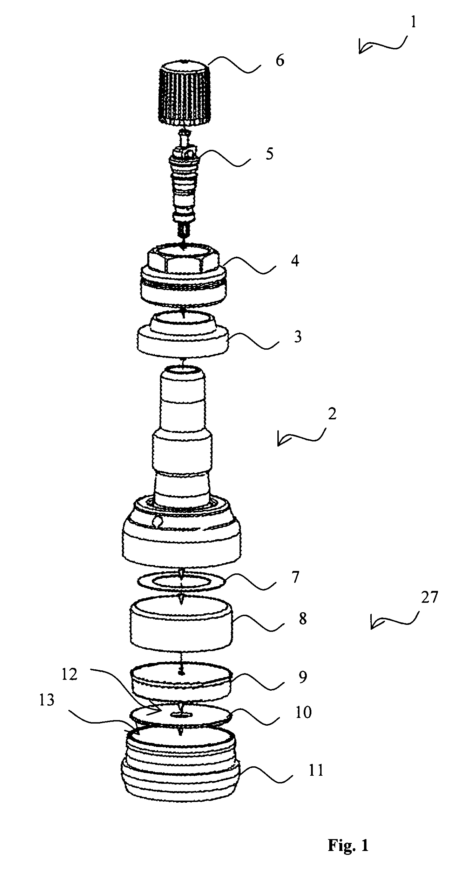

In Fig. 1 ist ein erstes Ausführungsform einer Ventilvorrichtung in Übereinstimmung mit der vorliegenden Erfindung veranschaulicht. Vor einer detaillierten Beschreibung folgen zunächst allgemeine Erläuterungen zu den Ausführungsformen und deren Vorteile.

Wie bereits eingangs ausgeführt, ist es bekannt, dass der von einer Reifendruckmesseinrichtung ermittelte Druck drahtlos bspw. an eine zentrale Fahrzeugsteuerung übermittelt wird.

In den Ausführungsformen umfasst eine Ventilvorrichtung typischerweise einen Ventilhauptkörper, der ein Ventil aufnimmt und zusätzlich bspw. eine Reifendruckmesseinrichtung aufnehmen kann. Die Reifendruckmesseinrichtung misst den Luftdruck in dem Fahrzeugreifen und übermittelt den gemessenen Luftdruck drahtlos an einen Empfänger, wie zum Bsp. eine zentrale Fahrzeugsteuerung.

Wie auch in der parallelen EP-Anmeldung mit der Anmeldenr. 09000154.6 dieses Anmelders offenbart, deren Beschreibung durch Bezugnahme Bestandteil dieser Patentanmeldung wird, kann bspw. ein Ventilkörper einer Ventilvorrichtung als Antenne dienen. Dazu ist der Antennenhauptkörper bspw. aus einem elektrisch leitfähigen Material wie Metall (z.B. Aluminium) gebildet, sodass der Ventilhauptkörper als eine Art Hertzscher Dipol oder Hohlraumstrahler dienen kann.

Wenn der Ventilkörper oder Teile des Ventilkörper als Antenne dienen, können die von ihm abgestrahlten elektromagnetischen Welle auf direktem Wege zu dem Empfänger gelangen und müssen nicht den Fahrzeugreifen durchdringen, wie es bspw. der eingangs erwähnte Stand der Technik (US 6,799,455 B1) vorschlägt.

Damit bspw. der Ventilhauptkörper als Antenne dienen kann, müssen die Funksignale von der Reifendruckmesseinrichtung in den Ventilhauptkörper elektrisch oder elektromagnetisch eingekoppelt werden. In der parallelen EP-Anmeldung (09000154.6) dieses Anmelders geschieht dies, indem ein elektrisches Koppelelement bspw. die Sendeeinrichtung der Reifendruckmesseinrichtung direkt elektrisch mit bspw. dem Boden des Ventilfußes des Ventilhauptkörpers verbindet. Durch diese direkte elektrische Verbindung zwischen Sendeeinrichtung und Ventilhauptkörper kann der Ventilhauptkörper als Antenne dienen, die die Funksignale der Reifendruckmesseinrichtung überträgt.

Bei den Ausführungsformen der vorliegenden Anmeldung kann der Ventilhauptkörper ebenfalls als Antenne dienen. Allerdings koppelt das Koppelelement die Sendeeinrichtung der Reifendruckmesseinrichtung nicht (nur) direkt elektrisch an den Ventilhauptkörper, sondern es koppelt die Reifendruckmesseinrichtung mit einer Antenneneinrichtung, die dann bspw. elektromagnetische Wellen aussendet, die wiederum in den Ventilhauptkörper einkoppeln. Diese Kopplung kann dabei als direkte elektrische Verbindung zwischen der Reifendruckmesseinrichtung, der Sendeeinrichtung bzw. einem Antennenausgang der Reifendruckmesseinrichtung, oder zum Beispiel auch kontaktlos als elektromagnetische Kopplung zur Antenneneinrichtung ausgebildet sein. Durch die Einkopplung der elektromagnetischen Wellen von der Antenneeinrichtung in den Ventilhauptkörper kann dieser wiederum als Antenne dienen, indem er bspw. in der Art eines Hertzschen Dipols oder Hohlraumstrahlers elektromagnetische Wellen abstrahlt, die bspw. den gemessenen Reifendruck repräsentieren und die dann bspw. von einer zentralen Fahrzeugsteuerung empfangen werden können.

Die Antenneneinrichtung ist bei manchen Ausführungsformen scheibenförmig ausgebildet und kann bspw. eine Öffnung aufweisen. Dabei bildet die Antenneneinrichtung bei manchen Ausführungsformen eine Scheibenantenne, die geeignet ist, elektromagnetische Wellen abzustrahlen. Die von der Antenneneinrichtung abgestrahlten elektromagnetischen Wellen koppeln, wie erwähnt, wenigstens teilweise in den Ventilhauptkörper ein, der nicht nur die elektromagnetischen Wellen empfängt, sondern diese selbst wiederum abstrahlt. Die Scheibenantenne ist dabei bspw. derart in der Ventilvorrichtung angeordnet, dass die Öffnung in Richtung des Ventilhauptkörpers zeigt.

Ist die Antenneneinrichtung bspw. scheibenförmig ausgestaltet, so entsteht bei manchen Ausführungsformen ein Kreisstrom in der scheibenförmigen Antenneneinrichtung, wenn das Koppelelement einen entsprechenden Wechselstrom einkoppelt. Weist die Antenneneinrichtung bspw. eine Öffnung auf, so kann die Antenneneinrichtung ähnlich einem Hohlstrahler fungieren, der geeignet ist, elektromagnetische Strahlung an einem Öffnungsende gerichtet, bspw. in Richtung des Ventilhauptkörpers, abzustrahlen.

Die Antenneneinrichtung hat bei anderen Ausführungsformen eine andere Form, die als Antenne geeignet ist, wie bspw. eine mäanderartige Form, die dann bspw. elektromagnetische Wellen dipolartig abstrahlt.

Folglich dient die Antenneneinrichtung bei manchen Ausführungsformen ebenfalls als elektromagnetisches Koppelelement, das die von dem Koppelelement, das zwischen der Sendeeinrichtung und der Antenneneinrichtung angeordnet ist, eingekoppelten Wechselströme in elektromagnetische Wellen umwandelt und diese derart abstrahlt, dass sie der Ventilhauptkörper empfangen und wiederum selbst abstrahlen kann.

Dadurch, dass die Antenneneinrichtung als elektromagnetisches Koppelelement bei manchen Ausführungsformen dienen kann, ist es bspw. möglich die Reifendruckmesseinrichtung derart in einem Aufnahmebereich des Ventilhauptkörpers anzuordnen, dass sie wenigstens teilweise zwischen dem Ventilhauptkörper und der Antenneneinrichtung liegt. Dies vereinfacht den Aufbau der gesamten Ventilvorrichtung, da die Reifendruckmesseinrichtung, die bspw. eine Platine aufweist, nicht mit dem Koppelelement und elektronischen Bauteilen, die zur Reifendruckerfassung vorgesehen sind, in Richtung des Ventilhauptkörpers angebracht werden müssen, sondern bspw. auch in die entgegengesetzte Richtung, vom Ventilhauptkörper weg, orientiert angeordnet werden können.

Der Ventilhauptkörper weist bei manchen Ausführungsformen bspw. zwei Bereiche auf: Einen Ventilaufnahmebereich, der bspw. rohartig ausgestaltet ist, und dazu dient, das eigentliche Ventil aufzunehmen und einen zweiten Bereich, der sich an den ersten anschließt und den Ventilfuß bildet. Der Ventilfuß kann bspw. zylinderförmig ausgebildet sein und einen Durchmesser aufweisen, der größer als der des rohrförmigen Ventilaufnahmebereiches ist. Der Ventilfuß ist bei manchen Ausführungsbeispielen hohlzylindrisch gebildet und ist bspw. geeignet, die Reifendruckmesseinrichtung wenigstens teilweise aufzunehmen. Dabei weist der Übergang zwischen dem rohrförmigen Aufnahmeabschnitt für das Ventil und dem zylinderförmigen Aufnahmeabschnitt für die Reifendruckmesseinrichtung bspw. einen Bodenbereich auf.

Die Anordnung der Reifendruckmesseinrichtung ist dann bspw. zwischen dem Bodenbereich des Ventilhauptkörpers und der, z.B. scheibenförmigen, Antenneneinrichtung angeordnet. Das Koppelelement ist demnach auf der Seite der Reifendruckmesseinrichtung angeordnet, die von dem Ventilhauptkörper abgewendet ist.

Damit ist bei manchen Ausführungsformen keine (direkte) elektrisch leitende Verbindung zwischen dem Ventilkörper und der Antenneneinrichtung vorhanden. Folglich koppelt die Reifendruckmesseinrichtung über die Sendeeinrichtung die Funkdaten, die dem gemessenen Reifendruck entsprechen, über das Koppelelement in die Antenneneinrichtung, die dann wiederum elektromagnetisch an den Ventilhauptkörper koppelt, sodass der Ventilhauptkörper als Antenne dienend die Funkdaten weiter übertragen kann. Auf diese Weise gelangen die Funksignale aus dem Reifeninneren, ohne dass sie bspw. von dem Reifenmantel abgeschwächt werden.

Bei manchen Ausführungsformen umfasst die Ventilvorrichtung einen elektrischen Energiespeicher, der zwischen dem Ventilhauptkörper und der Reifendruckmesseinrichtung angeordnet ist. Als elektrische Energiespeicher kommt bspw. eine Batterie oder ein Akkumulator zum Einsatz.

Manche Ausführungsformen umfassen weiter einen leitenden Abschnitt, der zwischen dem Ventilhauptkörper bzw. dessen Boden und dem Energiespeicher angeordnet ist. Der leitende Abschnitt kann dabei als Wellscheibe ausgebildet sein, die bspw. eine Öffnung aufweist. Der leitende Abschnitt ist bei manchen Ausführungsformen integral mit dem Ventilhauptkörper verbunden. Bei manchen Ausführungsformen ist der elektrische Minuspol des Energiespeichers mit dem elektrisch leitenden Abschnitt verbunden ist, sodass darüber ein Kontakt mit Ventilhauptkörper hergestellt wird, der wiederum zur Energieversorgung die Reifendruckmesseinrichtung elektrisch kontaktiert.

Bei manchen Ausführungsformen umfasst die Ventilvorrichtung weiter eine Aufnahme oder ein Reifendruckmessmodul mit einem Aufnahmebereich, in dem zumindest die Reifendruckmesseinrichtung und bei manchen Ausführungsformen weiter auch die Antenneneinrichtung und/oder der elektrische Energiespeicher angeordnet ist/sind.

Die Aufnahme ist zum Beispiel aus einem spritzgussfähigen Material wie Kunststoff gebildet und so dimensioniert, dass der (zylinderförmige) Abschnitt des Ventilfußes sie wenigstens teilweise aufnehmen kann. Damit bilden bei manchen Ausführungsformen der Aufnahmeabschnitt des Ventilfußes des Ventilhauptkörpers und die Aufnahme für die Reifendruckmesseinrichtung zusammen einen wenigstens teilweise geschlossenen Raum, wenn die beiden Teile miteinander verbunden sind. In diesem Raum ist bei manchen Ausführungsformen wenigstens eines der folgenden Teile angeordnet: elektrisch leitender Abschnitt, Energiespeicher, Reifendruckmesseinrichtung und/oder Antenneneinrichtung.

Bei manchen Ausführungsformen bildet die Antenneneinrichtung einen Teil des Bodens der Aufnahme, insbesondere wenn die bspw. scheibenförmig ausgebildet ist. Die Aufnahme ist bei manchen Ausführungsformen becherartig ausgebildet und wird bspw. so an/in dem Ventilfuß angeordnet, dass die offene Seite der Becherform in Richtung des Ventilfußes liegt, während der Boden der Becherform gegenüber des Ventilfußes angeordnet ist.

Folglich ist bei manchen Ausführungsformen die Reihenfolge der in dem aus Ventilfuß und Aufnahme gebildeten Raum von Ventilfuß wegblickend, d.h. in Richtung des Reifeninneren, angeordneten Teile wie folgt: elektrisch leitender Abschnitt, Energiespeicher, Reifendruckmesseinrichtung, Antenneneinrichtung und - je nach Ausführungsformen - Bodenplatte oder Teilbodenabschnitt der Aufnahme.

Die Antenneneinrichtung ist bei manchen Ausführungsformen als selbstständiges Bauelement, bspw. als Metallscheibe ausgebildet. Bei anderen Ausführungsformen wird diese bspw. durch Aufdampfen bspw. auf den Bodenabschnitt der Aufnahme ausgebildet.

Bei manchen Ausführungsformen weist sowohl die Antenneneinrichtung als auch der Boden der becherförmigen oder anders geformten Aufnahme, eine Öffnung auf, durch die Fluid, wie bspw. Luft oder Reifengas, aus dem Reifeninneren in die Ventilvorrichtung eindringen kann. Dadurch liegt der Fluiddruck, der sich im inneren des Reifens ausbildet ebenfalls an der druckempfindlichen Messeinrichtung der Reifendruckmesseinrichtung an. Damit ist es bei manchen Ausführungsformen nicht erforderlich, zusätzliche Öffnungen bspw. in einer Seitenwand der Aufnahme vorzusehen.

Dadurch, dass bei manchen Ausführungsformen die Aufnahme aus einem nicht oder nur schlecht leitenden Material gebildet ist und in dieser Aufnahme bspw. die Antenneneinrichtung, die Reifendruckmesseinrichtung und der Energiespeicher angeordnet sind, ist zumindest die Antenneneinrichtung von dem Ventilhauptkörper elektrisch isoliert, wenn die Aufnahme innerhalb des Ventilfußes angeordnet ist, da sich dann bspw. eine Wand der Aufnahme zwischen der Antenneneinrichtung und der (elektrisch leitenden) Wand des Ventilfußes befindet. Wie oben beschrieben, koppelt die Antenneneinrichtung dann elektromagnetisch mit dem Ventilhauptkörper.

Bei manchen Ausführungsformen ist die Aufnahme modulartig mit dem Ventilhauptkörper, bspw. mit seinem Ventilfuß, verbindbar. Dabei bildet bspw. die Aufnahme, die in ihr angeordnete Reifendruckmesseinrichtung und Antenneneinrichtung ein gemeinsames Reifendruckmessmodul, das mit dem Ventilhauptkörper verbindbar ist.

Bei manchen Ausführungsformen weist die Aufnahme eine Hinterschneidung auf und der Ventilfuß des Ventilhauptkörpers weist einen elastisch verformbaren Bereich auf, der durch Verformung, wie bspw. Umbördeln, in die Hinterschneidung eingreifen kann und somit die Aufnahme fest mit dem Ventilhauptkörper verbindet. Bei anderen Ausführungsformen weist die Aufnahme bspw. (zusätzlich) ein Außengewinde und der Ventilfuß ein Innengewinde auf, sodass die Aufnahme in den Ventilfuß geschraubt werden kann. Es kann auch (zusätzlich) die Aufnahme in den Ventilfuß geklebt oder eingeclipst werden. Dafür kann die Aufnahme eine entsprechend Aussparung aufweisen, in der bspw. Klebstoff eingebracht werden kann bzw. in die ein entsprechender Vorsprung des Ventilfußes einrastet.

Bei manchen Ausführungsformen endet der elektrisch leitende Ventilfußbereich vor der Antenneneinrichtung. Die Aufnahme bzw. das Modulgehäuse sind bspw. aus elektrisch nicht leitfähigem Material gebildet, sodass in dem Bereich der Antenneneinrichtung kein elektrisch leitendes Material vorhanden ist und elektromagnetische Wellen in diesem Bereich aus der Ventilvorrichtung ausgestrahlt werden können.

Manche Ausführungsformen betreffen ein Reifendruckmessmodul für eine Ventilvorrichtung. Das Reifendruckmessmodul umfasst bspw. eine Reifendruckmesseinrichtung, eine Antenneneinrichtung und ein Modulgehäuse, das bspw. im Wesentlichen der oben erwähnten Aufnahme entspricht. Die Reifendruckmesseinrichtung weist ein Koppelelement auf, das eine Sendeeinrichtung der Reifendruckmesseinrichtung mit der Antenneneinrichtung elektromagnetisch und/oder elektrisch koppelt. Die obigen Ausführungen zu den einzelnen Bestandteilen Aufnahme, Antenneneinrichtung, Reifendruckmesseinrichtung und elektrisch leitender Abschnitt gelten dementsprechend auch für die Ausführungsformen, die das Reifendruckmessmodul betreffen.

Zurückkommend zu Fig. 1, veranschaulicht diese eine erste Ausführungsform einer Ventilvorrichtung 1 in einer schematischen Ansicht. Der Einfachheit halber sind in der folgenden Beschreibung der Ausführungsformen gleiche Elemente in den Figuren 1 bis 5 mit gleichen Bezugszeichen und ähnliche Elemente mit gleichen Bezugszeichen mit "Strich" versehen.

Die Ventilvorrichtung 1 setzt sich bei den in den Fig. 1 bis 5 veranschaulichten Ausführungsformen im Wesentlichen aus zwei Hauptabschnitten zusammen, nämlich einem Ventilhauptkörper 2 und einem Reifendruckmessmodul 27.

Der Ventilhauptkörper 2 ist bspw. aus einem elektrisch leitfähigen Material wie Aluminium hergestellt und umfasst im Wesentlichen die für eine Reifenventilfunktion benötigten Teile: ein Reifenventil 5 mit Ventilkappe 6 und eine Mutter 4 mit einer Dichtung 3, die zur Befestigung der Ventilvorrichtung an einer Felge dient. Dabei wird die Ventilvorrichtung von innen durch ein Ventilloch der Felge geschoben und die Mutter 4 mit der Dichtung 3 von außen an der Ventilvorrichtung 1 festgeschraubt. Dadurch ist die Ventilvorrichtung sicher in der Felge gehalten und die Dichtung 3 sorgt für eine gute Abdichtung, sodass das Fluid, wie Luft oder Reifengas, im Inneren des Reifens verbleibt. Zusätzlich kann die Dichtung 3 bei manchen Ausführungsformen eine weitere Stützfunktion für die Ventilvorrichtung 1 übernehmen.

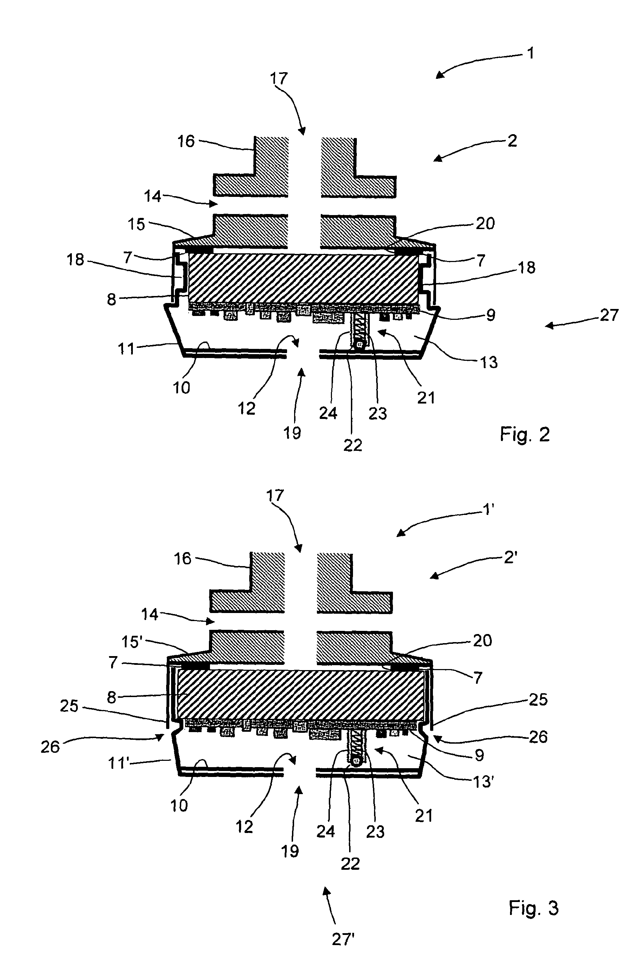

Der Ventilhauptkörper 2 weist bspw. eine Fluidführung auf, die aus einer zentralen Mittenbohrung 17 (Fig. 2 bis 5) und entsprechenden Seitenbohrungen 14 gebildet ist. Dadurch kann von Außen ein Fluid in das Reifeninnere gefüllt werden bzw. dieses aus dem Reifeninneren abgelassen werden. Die Fludiführung steht dabei in Fluidverbindung mit dem Reifenventil 5.

Das Reifendruckmessmodul 27 umfasst im Wesentlichen die für die Reifendruckmessung benötigte Elektronik und die für die drahtlose Übertragung erforderlichen elektronischen Bauteile, wie bspw. Leiterplatte(n), Chip(s), Steuereinrichtung(en), Sende- und/oder Empfangskomponenten, (Druck-)-Sensor(en) usw. Dazu umfasst das Reifendruckmessmodul 27 eine Reifendruckmesseinrichtung 9, einen als Batterie ausgestalteten Energiespeicher 8 und eine Antennenscheibe 10. Außerdem umfasst das Reifendruckmessmodul 27 eine Aufnahme (oder Modulgehäuse) 11 mit einem Hohlraum 13, in der die Antennenscheibe 10, die Reifendruckmesseinrichtung 9 und die Batterie 8 angeordnet sind.

Die Aufnahme 11 ist bspw. becherförmig ausgestaltet und der Hohlraum 13 ist entsprechend der Batterie 8 und der Reifendruckmesseinrichtung 9 dimensioniert, sodass die Aufnahme 11 diese Bauteile im Wesentlichen vollständig aufnehmen kann. Die Aufnahme 11 hat eine zylindrische Außenwand und weist einen planen Boden auf. Bei anderen Ausführungsformen weist die Aufnahme 11 eine andere Form auf und kann bspw. rechteckig, quadratisch, oval, mehreckig sein oder einen beliebigen anderen Querschnitt aufweisen.

Das Reifendruckmessmodul 27 wird bei manchen Ausführungsformen an einen Ventilfußbereich 15 des Ventilhauptkörpers 2 angebracht (s. Fig. 2 bis 5). Dazu sind wenigstens ein Bereich des Ventilfußes und ein Bereich der Aufnahme aneinander angepasst, sodass diese wenigstens teilweise ineinander greifen können. Der Ventilfußbereich erstreckt sich dabei so weit in Richtung der Aufnahme 11, dass bspw. das Ventilfußende auf der Höhe der Oberkante der Batterie 8 endet, d.h. an der Übergangsstelle zwischen Batterie 8 und Reifendruckmesseinrichtung 9. Folglich befindet sich bei manchen Ausführungsformen in dem Bereich der Antennenscheibe 10 nur die Aufnahme 11, die bspw. aus einem elektrisch nicht leitenden Material gebildet ist, sodass die von der Antennenscheibe 10 abgestrahlten elektromagnetischen Wellen nicht in die Aufnahme 11 und nicht in den Ventilfuß 15 in dem Bereich einkoppeln, in dem die Antennenscheibe 10 angeordnet ist.

So umfasst bei der ersten Ausführungsform der Ventilfußbereich 15 des Ventilhauptkörpers 2 einen becherförmigen Bereich mit zylindrischen Seitenwänden (s. Fig.2). In diesen becherförmigen Bereich kann das Reifendruckmessmodul 27 mit der Aufnahme 11 eingeschoben werden. Dabei dient eine Wellscheibe 7, die eine Öffnung 20 aufweist, als elektrisches Kontaktmittel zwischen dem Minuspol der Batterie 8 und einem planen Bereich des Ventilfußes 15, sodass ein elektrischer Kontakt zwischen Minuspol und Reifendruckmesseinrichtung über den Ventilfuß 15 hergestellt werden kann..

Die Reifendruckmesseinrichtung 9 ist ausgestaltet, den Fluiddruck, bspw. Luft- oder Reifengasdruck, im Reifeninneren zu messen und dem gemessenen Reifendruck entsprechende Messdaten drahtlos, bspw. an eine zentrale Fahrzeugsteuerung, zu übermitteln. Dazu wandelt die Reifendruckmesseinrichtung 9 bspw. die ermittelten Reifendruckdaten in Funkdaten um und übermittelt die Funkdaten drahtlos über eine Sendeeinrichtung bspw. an eine zentrale Steuerung eines Kraftfahrzeugs. Die dafür benötigten elektronischen Komponenten befinden sich bspw. auf einer entsprechenden Hauptplatine der Reifendruckmesseinrichtung 9, wie auch in den Fig. 2 bis 5 schematisch dargestellt ist.

Die Reifendruckmesseinrichtung 9 weist weiter ein Koppelelement 21 auf, das bspw. die Sendeeinrichtung bzw. deren Antennenausgang der Reifendruckmesseinrichtung 9 elektrisch bzw. elektromagnetisch direkt mit der Antennenscheibe 10 koppelt. Das Koppelement 22 weist eine Hülse 24 auf, in der eine Feder 23 angeordnet ist. Die Hülse 24 und die Feder 23 lagern eine elektrisch leitende Kugel 22 elastisch, sodass die Kugel 22 aufgrund der elastischen Verformung der Feder 23 gegen die Antennenscheibe 10 drückt. Bei alternativen Ausführungsformen weist das Koppelelement 21 bspw. einen Stift anstelle der Kugel 22 oder bspw. eine Feder mit einer Kontaktfläche auf, um den elektrischen Kontakt zur Antennenscheibe 10 herzustellen.

Folglich gelangen die von der Reifendruckmesseinrichtung 9 über die Sendeeinrichtung bzw. einen Antennenausgang übermittelten Funkdaten in die Antennenscheibe 10. Die Antennenscheibe 10 weist eine Öffnung 12 auf und ist aus einem elektrisch leitenden Material gebildet. Die Öffnung 12 zeigt dabei in Richtung des Ventilhauptkörpers 2 und ist bspw. mit seiner Mittenbohrung 17 ausgerichtet. Die Antennenscheibe 10 ist folglich derart ausgestaltet, dass sie elektromagnetische Wellen aussenden kann, die wiederum wenigstens teilweise in den Ventilhauptkörper 2 einkoppeln. Folglich stellt die Antenneneinrichtung 10 auf diese Weise eine drahtlose elektromagnetische Kopplung zwischen der Reifendruckmesseinrichtung 9 und dem Ventilhauptkörper 2 her. Der Ventilhauptkörper strahlt dann die empfangenen Funkwellen als Hertzscher Dipol oder Hohlraumstrahler ab, sodass sei von der zentralen Steuerung des Kraftfahrzeugs empfangen werden können.

Das Reifendruckmessmodul 27 weist bei der ersten Ausführungsform eine Vertiefung 18 auf, die sich ringförmig um die Außenwand der Aufnahme 11 erstreckt. Beim Zusammenbau der Ventilvorrichtung kann in diese Vertiefung 18 Klebstoff eingebracht werden, der eine feste Klebeverbindung zwischen der Innenwand des becherartigen Abschnitts des Ventilfußes 15 und der Aufnahme 11 herstellt, sodass das Reifendruckmessmodul 27 unverlierbar mit dem Ventilfuß 15 des Ventilhauptkörpers 2 verbunden ist.

In einem Bodenbereich der Aufnahme 11 ist in der Mitte eine Öffnung 19 vorgesehen, die eine kommunizierende Fuldverbindung zu der Öffnung 12 in der Antennenscheibe 10 herstellt. Folglich kann ein Fluid, das im Inneren eines Reifens vorhanden ist, durch die Öffnungen 19 und 12 in den Innenraum 13 des Reifendruckmessmoduls 27 eindringen, sodass an der Reifendruckmesseinrichtung 9 der entsprechende Fluiddruck des Reifens anliegt und von ihr gemessen werden kann.

Bei der ersten Ausführungsform ist die Dimension der Antennenscheibe 10 so gewählt, dass ihr Durchmesser gleich oder kleiner dem Bodendurchmesser der Aufnahme 11 ist, sodass die Antennenscheibe 10 bündig auf dem Bodenbereich der Aufnahme 11 aufliegt. Folglich ist die Antennenscheibe 10 bspw. zwischen dem Koppelelement 21 und dem Bodenbereich der Aufnahme 11 eingeklemmt. Bei alternativen Ausführungsformen ist die Antennenscheibe oder eine andere Form, z.B. Mäanderform, die ebenfalls als Antenne geeignet ist, direkt auf dem Bodenbereich der Aufnahme 11 aufgedampft.

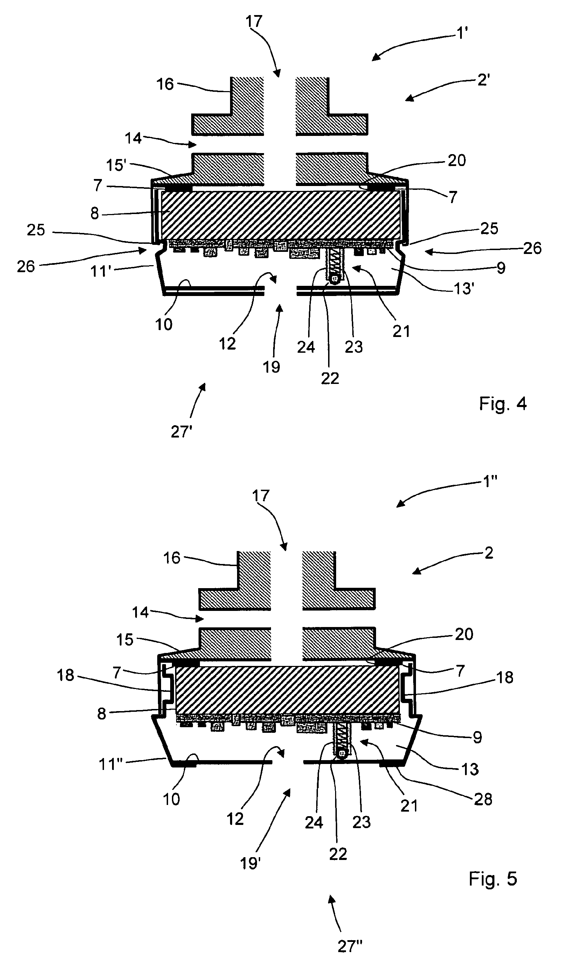

Die in den Fig. 3 und 4 veranschaulichte zweite Ausführungsform unterscheidet sich im Wesentlichen von der ersten Ausführungsform durch die Art der Befestigung des Reifendruckmessmoduls 27' an dem Ventilfuß 15' des Ventilhauptkörpers 2'. Bei der zweiten Ausführungsform weist die Aufnahme 11' des Reifendruckmessmoduls 27' eine Hinterschneidung 26 im Bereich der Oberkante bzw. des Übergangsbereiches von Batterie 8 und der Reifendruckmesseinrichtung 9 auf, die sich ringförmig um die becherförmige Aufnahme 11' erstreckt und in den Hohlraum 13' hereinragt. Weiter weist der becherförmige Abschnitt des Ventilfußes 15 einen elastisch verformbaren Bereich 25 auf, der derart umgebördelt werden kann, dass er in die Hinterschneidung 26 der Aufnahme 11' eingreift (s. Fig. 4). Dadurch kann das Reifendruckmessmodul 27' unverlierbar mit dem Ventilfuß 15 'verbunden werden.

Die in Fig. 5 veranschaulichte dritte Ausführungsform unterscheidet sich von der ersten Ausführungsform lediglich dadurch, dass hier die Antennenscheibe 10 im Wesentlichen den Boden der Aufnahme 11' bildet. Dementsprechend ist die Öffnung 19' im Bodenbereich der Aufnahme 11' deutlich größer ausbildet als bei der ersten Ausführungsform. Die Aufnahme 11' weist hier einen kleinen Vorsprung 28 in ihrem Bodenbereich auf, sodass die Antennenscheibe 10 von diesem Vorsprung 28 gehalten werden kann.

Auch bei dieser Ausführungsform sind keine weiteren Halterungen vorgesehen, die die Reifendruckeinrichtung, die Batterie und/oder die Antennenscheibe gesondert halten. Folglich ist es bei den Ausführungsformen möglich, das Reifendruckmessmodul einfach herzustellen, indem die einzelnen Komponenten, wie Antennenscheibe, Reifendruckmesseinrichtung und Batterie in dem entsprechend vorgesehenen Hohlraum des Reifendruckmessmoduls angeordnet werden. Dieses so gebildete Reifendruckmessmodul muss dann nur noch mit einem entsprechenden Aufnahmebereich des Ventilhauptkörpers verbunden werden, um die Ventilvorrichtung herzustellen.

## Patentansprüche

1. Ventilvorrichtung mit:
einem Ventilhauptkörper (2), der wenigstens teilweise aus einem elektrisch leitfähigen Material hergestellt ist,
einer Reifendruckmesseinrichtung (9), und
einer Antenneneinrichtung (10),
wobei die Reifendruckmesseinrichtung (9) ein elektromagnetisches Koppelelement (21) aufweist, das die Reifendruckmesseinrichtung (9) elektrisch oder elektromagnetisch mit der Antenneneinrichtung (10) koppelt.

2. Ventilvorrichtung nach Anspruch 1, bei welcher die Antenneneinrichtung (10) so ausgebildet ist, dass sie von der Reifendruckmesseinrichtung (9) kommende Funksignale wenigstens teilweise elektromagnetisch in den Ventilhauptkörper (2) einkoppelt.

3. Ventilvorrichtung nach Anspruch 1 oder 2, bei welcher die Antenneneinrichtung (10) scheibenförmig ausgebildet ist.

4. Ventilvorrichtung nach einem der vorhergehenden Ansprüche, bei welcher die Antenneneinrichtung (10) eine Öffnung (12) aufweist.

5. Ventilvorrichtung nach einem der vorhergehenden Ansprüche, bei welcher die Reifendruckmesseinrichtung (9) derart in einem Aufnahmebereich (13) des Ventilhauptkörpers (2) angeordnet ist, dass sie wenigstens teilweise zwischen dem Ventilhauptkörper (2) und der Antenneneinrichtung (10) liegt.

6. Ventilvorrichtung nach einem der vorhergehenden Ansprüche, bei welcher keine elektrisch leitende Verbindung zwischen dem Ventilkörper (2) und der Antenneneinrichtung (10) vorhanden ist.

7. Ventilvorrichtung nach einem der vorhergehenden Ansprüche, bei welcher ein elektrischer Energiespeicher (8) zwischen dem Ventilhauptkörper (2) und der Reifendruckmesseinrichtung (9) angeordnet ist.

8. Ventilvorrichtung nach Anspruch 7, bei welcher zwischen dem Ventilhauptkörper (2) und dem Energiespeicher (8) ein elektrisch leitender Abschnitt (7) angeordnet ist.

9. Ventilvorrichtung nach Anspruch 8, bei welcher der elektrische leitende Abschnitt (7) als eine Wellscheibe mit einer Öffnung ausgebildet ist und/oder elektrisch mit dem Minuspol des Energiespeichers (8) verbunden ist.

10. Ventilvorrichtung nach einem der vorhergehenden Ansprüche, weiter eine Aufnahme (11, 11', 11") mit einem Aufnahmebereich (13) umfassend, in dem die Reifendruckmesseinrichtung (9) angeordnet ist.

11. Ventilvorrichtung nach Anspruch 10, bei welcher die Aufnahme (11, 11', 11") modulartig mit dem Ventilhauptkörper (2) verbindbar ist.

12. Ventilvorrichtung nach Anspruch 11, bei welcher die Aufnahme (11, 11', 11") eine Öffnung (19, 19') aufweist, die gegenüberliegend von der Reifendruckmesseinrichtung (9) angeordnet ist.

13. Ventilvorrichtung nach einem der Ansprüche 10 bis 12, bei welcher der Ventilhauptkörper (2) einen Aufnahmebereich (15) aufweist, in dem die Aufnahme (11, 11', 11 ") mit der Reifendruckmesseinrichtung (9) aufgenommen ist.

14. Ventilvorrichtung nach einem der Anspruch 13, bei welcher der Aufnahmebereich (15) eine Wandbereich (25) aufweist, der in eine Hinterschneidung (26) der Aufnahme (11, 11', 11") eingreift.

15. Reifendruckmessmodul für eine Ventilvorrichtung nach einem der Ansprüche 1 bis 14 mit:
einer Reifendruckmesseinrichtung (9),
einer Antenneneinrichtung (10), und
einem Modulgehäuse (11, 11', 11"), wobei
die Reifendruckmesseinrichtung (9) ein Koppelelement (21) aufweist, das die Reifendruckmesseinrichtung (9) mit der Antenneneinrichtung (10) elektrisch oder elektromagnetisch koppelt.
